# EUROPEAN PATENT APPLICATION

(11) **EP 0 579 183 A1**
(43) Date of publication of application: **19.01.1994**
(21) Application number: 93111224.7
(22) Date of filing: 13.07.1993
(51) Int. Cl.: B60G 5/053, B60G 11/04, F16F 1/22

(54) **A leaf spring suspension for a commercial vehicle**

(30) Priority: 14.07.1992 DE 4223036
(71) Applicant: IVECO MAGIRUS AG, D-89079 Ulm (DE)
(72) Inventor: Fröhler, Helmut, D-7900 Ulm-Gögglingen (DE); Hospach, Anton, D-7938 Oberdischingen (DE); Wolf, Georg, D-7900 Ulm (DE)
(74) Representative: Boggio, Luigi

(57) **Abstract**

Known leaf spring suspensions are provided with a progressive spring characteristic for increasing loading of the vehicle. However, the progressive spring characteristic is produced using very costly additional means.

A leaf spring suspension (1) with a two-stage parabolic or trapezoidal spring (3) is proposed for a floating sprung tandem axle of a multi-axle commercial vehicle (2). The spring stiffness of the first stage (5) of the parabolic or trapezoidal spring (3) is designed for an unloaded commercial vehicle, whereas the second stage (5, 6) of the parabolic or trapezoidal spring (3) is effective when the vehicle is loaded.

## Description

This invention relates to a leaf spring suspension for a commercial vehicle.

Three-axle building site vehicles, which frequently travel empty for a large proportion of their journeys - not only off-road but also on the open road, are particularly subject to shaking vibrations, due to the vertical run-out of the tyres of the rear axle. These vibrations are less damped and more distinct the better the road is. Depending on the relative phasing of the vertical run-out on the rear wheels between right and left, excitation of the commercial vehicle occurs, resulting in rolling or pitching vibrations. Parallel excitation gives rise to shaking in the driver's cab, which is extremely tiresome, whilst the rolling motion of the vehicle is not critical in the driver's cab. When travelling on the road, the intensity of the shaking vibration therefore exhibits a random dependence on the relative position of the vertical run-out of the wheels. The nature of the vibration thus changes continuously when travelling round curves. Moreover, on poor-quality roads the development of the pitching vibrations is disrupted or masked to such an extent that the driver does not feel the effects of it.

When there is corresponding excitation resulting in pitching vibrations the vehicle oscillates about an instantaneous centre of pitching rotation in the region of the front axle. In this situation only the spring effect due to the tyres, and not the rear axle suspension, operates at the rear axle. When the vehicle is empty, the effect of the high spring stiffness, damping and friction of the rear axle springs is that the known leaf springs do not respond anyway at small excitations. The situation thus arises that at certain speeds the entire commercial vehicle is excited so that it executes a natural pitching vibration which is almost undamped. This can then result in the driver's cab in an annoying sliding motion in the longitudinal direction of the vehicle.

The object of the invention is to create a leaf spring suspension for a commercial vehicle, which employs simple means to counteract the above-mentioned disadvantages, and which is of simple construction. In particular, the invention results in significantly improved driver comfort when the vehicle is unloaded, when travelling both off-road and on the open road.

This object which forms the basis of the invention is achieved by means of the features cited in the characterising clause of claim 1.

The subject of the invention is advantageously further developed by means of the features of subsidiary claims 2 to 6.

The essence of the invention is a two-stage parabolic or trapezoidal spring as the rear axle spring of a three-axle or multi-axle commercial vehicle with a floating spring mounting arrangement. The spring stiffness of the first stage of the parabolic or trapezoidal spring is designed for an unloaded commercial vehicle, whereas the second stage of the parabolic or trapezoidal spring is effective when the vehicle is loaded.

These parabolic or trapezoidal springs are advantageously provided as a spring combination comprising a main spring and an auxiliary spring.

Both partial springs (main spring and auxiliary spring) of the parabolic or trapezoidal springs are braced by means of two spring shackles to the rear axle fixed to the vehicle in such a way as to permit a to-and-fro oscillating motion at a tandem axle unit of the commercial vehicle.

A two-stage spring is therefore employed for a tandem axle unit of a commercial vehicle with a floating mounting arrangement. This spring may be constructed as a parabolic spring or as a trapezoidal spring. It is essential that only the main spring is in engagement when the vehicle is empty. Due to its very much softer spring characteristic, this first stage results in the vehicle providing a significantly improved level of driver comfort than that provided by known leaf spring suspensions, both in the presence of vibrations which are self-induced and in the presence of those which are induced by the road. When the vehicle is loaded, the overall spring characteristic results in the same behaviour as with the springs which have hitherto been customary.

Spring suspensions for motor vehicles which comprise leaf springs with a progressive spring characteristic are known from DE-GM 1 957 183, DE-AS 1 755 803 and DE-OS 1 907 183. In these types of suspension the progressive spring characteristic becomes effective with increasing loading of the vehicle. However, the progressive spring characteristic is achieved by means of very expensive additional arrangements and does not fundamentally relate to a floating spring mounting of the tandem axle of a commercial vehicle, as is provided in the present invention.

The invention will be described in more detail below by means of an embodiment, and with reference to the accompanying drawings, where:
- Figure 1: illustrates a floating spring mounting with a two-stage parabolic spring for a tandem axle of a multi-axle commercial vehicle;

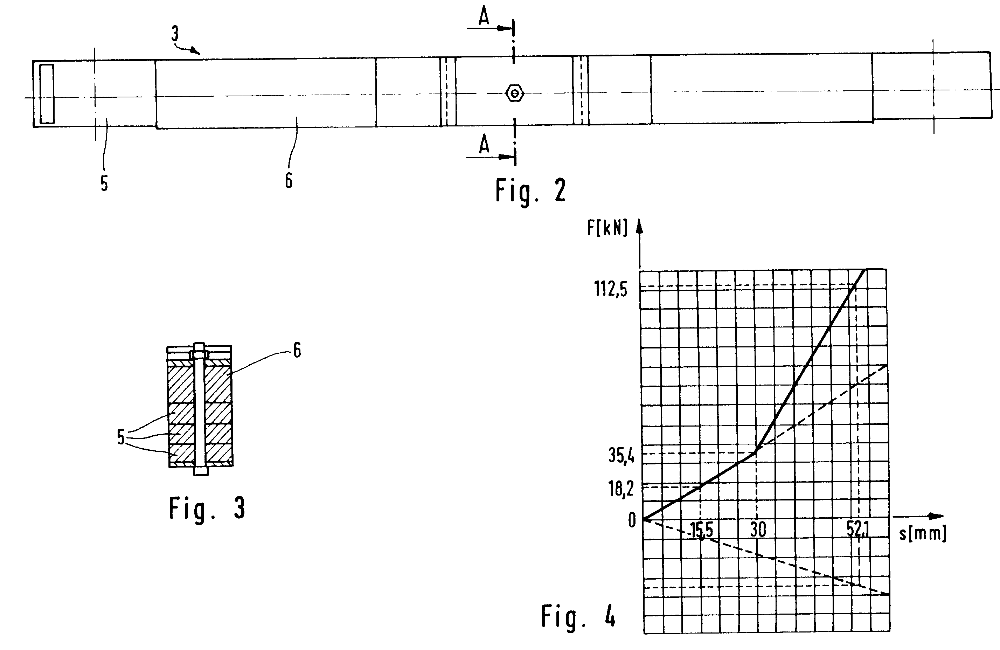

- Figure 2: is a schematic plan view of a two-stage parabolic spring as shown in Figure 1;
- Figure 3: is a cross-section along the line A-A through the two-stage parabolic spring shown in Figure 2; and
- Figure 4: is a schematic illustration of the spring stiffness F of the two-stage parabolic spring shown in Figures 1 to 3 as a function of the spring travel s.

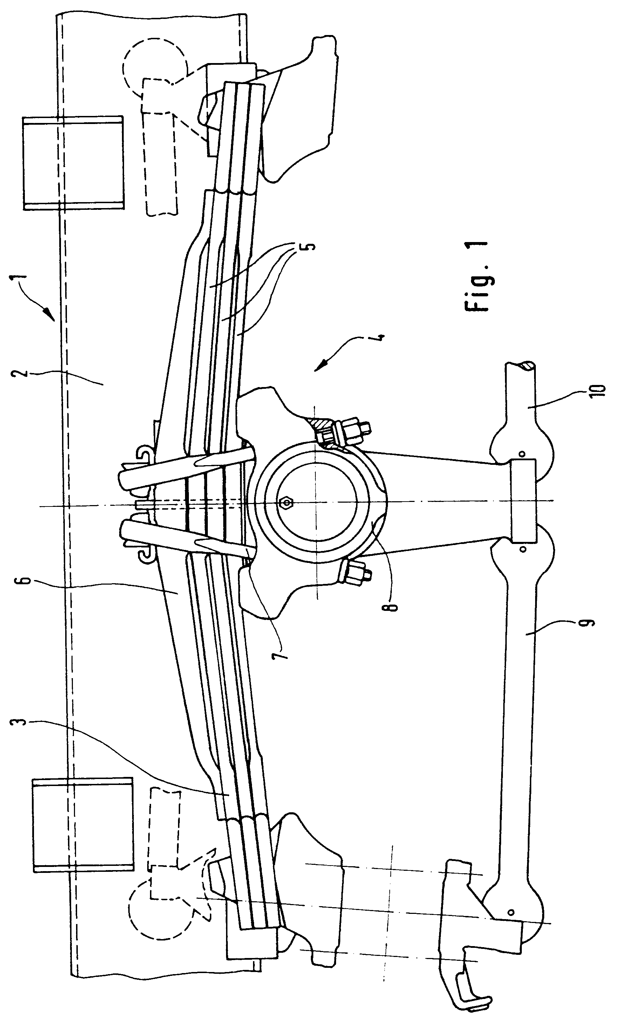

As shown in Figure 1, a leaf spring suspension (1) of a commercial vehicle (2) comprises a two-stage parabolic spring (3) which is provided as the rear axle suspension of the floating sprung tandem axle of the commercial vehicle.

In the known manner, the floating spring mounting (4) provides a first swinging arm (9) for the first sprung axle of the tandem axle unit and a second swinging arm (10) for the second sprung axle, both swinging arms (9, 10) being articulated centrally and fixed to the vehicle at the rear axle (8) fixed to the vehicle. The two-stage parabolic spring (3) centrally braced to the rear axle (8) which is fixed to the vehicle by means of two spring shackles (7), the two ends of the parabolic spring (3) providing resilient, floating support for the two sprung axles of the tandem axle unit.

In particular, the two-stage parabolic spring is provided in the form of an assembly. In the embodiment shown in Figure 1 it comprises three leaf-shaped parabolic blades (5) as the main spring, these blades being of substantially identical construction and in particular being of the same length. A single leaf-shaped blade (6) of shorter overall length and of considerably greater thickness is located above the leaf spring assembly (5) as the auxiliary spring. The overall arrangement is effected so that only the first stage (5) is effective when the commercial vehicle (2) is empty. Due to the very soft spring characteristic of this first stage, the vehicle provides a level of driver comfort in the presence of vibrations which are self-induced or externally induced which is significantly improved compared with the prior art. The second stage (6), which has a significantly harder spring characteristic, does not become effective until the vehicle is loaded. It gives rise to a springing behaviour for the vehicle, when the latter is loaded, which is the same as that obtained with known single-stage springs. The two-stage parabolic spring (3) therefore exhibits a kinked spring characteristic, as shown in Figure 4 for instance as a function of the spring travel.

All the novel features disclosed in the description and/or illustrated in the drawings, either alone or in meaningful combination, are essential to the invention, even if as they are not expressly claimed in the claims.

## Claims

1. A leaf spring suspension (1) for a commercial vehicle (2), characterised by a two-stage parabolic or trapezoidal spring as the rear axle spring of a three-axle or multi-axle commercial vehicle (2) with a floating spring mounting arrangement (4).

2. A leaf spring suspension according to claim 1, characterised in that the spring stiffness of the first stage of the parabolic or trapezoidal spring is designed for an unloaded commercial vehicle, whereas the second stage of the parabolic or trapezoidal spring is effective when the vehicle is loaded.

3. A leaf spring suspension according to claim 1 or 2, characterised in that the two-stage parabolic or trapezoidal spring is constructed in the form of an assembly.

4. A leaf spring suspension according to claim 3, characterised in that three leaf springs (5) form the main spring corresponding to the first stage (Figure 1).

5. A leaf spring suspension according to any one of claims 1 to 4, characterised in that the auxiliary spring (6) is shorter than the main spring corresponding to the first stage (Figure 1).

6. A leaf spring suspension according to any one of claims 1 to 5, characterised in that both partial springs are braced by means of two spring shackles (7) to the rear axle (8) of the commercial vehicle (2), which rear axle is fixed to the vehicle.
